# FASCICULE DE BREVET EUROPEEN

(11) **EP 0 913 595 B1**
(45) Date de publication et mention de la délivrance du brevet: **29.12.2004**
(21) Numéro de dépôt: 98420195.4
(22) Date de dépôt: 29.10.1998
(51) Int. Cl.: F16C 11/06

(54) **Procédé de fabrication d'une bague intérieure d'une rotule métallique, et rotule ainsi réalisée**
Herstellungsverfahren eines Innenringes von einem metallischen Kugelgelenk und so erhaltenes Kugelgelenk
Manufacturing method of an inner ring of a metallic ball joint and ball joint so obtained

(30) Priorité: 31.10.1997 FR 9713990
(43) Date de publication de la demande: 06.05.1999
(73) Titulaire: SARMA, F-26240 Saint-Vallier (FR)
(72) Inventeur: Buard, Michel, 26240 Saint-Vallier (FR); Pruvost, Bernard, 07300 Tournon (FR)
(74) Mandataire: Myon, Gérard Jean-Pierre

(56) Documents cités:
- FR-A- 845 171
- FR-A- 2 258 552
- US-A- 2 076 028
- US-A- 2 767 034
- US-A- 3 107 954

## Description

La présente invention a trait à un procédé de fabrication d'une bague intérieure d'une rotule métallique.

Les rotules métalliques sont en particulier utilisées dans l'industrie aéronautique, afin d'immobiliser en translation un organe tel qu'une bielle par rapport à une pièce de structure de la construction, tout en permettant leur mouvement relatif en rotation.

De manière connue, une telle rotule métallique comprend une bague intérieure dont la surface intérieure est adaptée pour être montée sur un arbre. A cet effet, cette surface intérieure peut être pourvue de gorges coopérant avec des cannelures réalisées sur la surface extérieure de l'arbre, de manière à garantir une meilleure liaison mutuelle.

Cette bague intérieure possède une surface extérieure sphérique tronquée, définissant ainsi deux parois latérales, apte à coopérer avec la surface intérieure correspondante d'une bague extérieure. La bague intérieure et la bague extérieure possèdent donc trois degrés de liberté mutuels en rotation, et sont assujetties l'une à l'autre en translation.

On connaît différents procédés de réalisation d'une telle rotule métallique. L'un de ceux-ci consiste à réaliser tout d'abord la bague intérieure selon ses dimensions définitives, puis à rapporter autour de la périphérie externe un manchon métallique qui est embouti contre la surface extérieure de la bague intérieure. Le manchon est alors usiné au niveau de sa périphérie extérieure, de manière à constituer la bague extérieure définitive.

Ce procédé présente toutefois un inconvénient lié au fait qu'il est nécessaire que la bague intérieure soit plus dure que le manchon rapporté destiné à former la bague extérieure. Or, cette exigence est incompatible avec certaines applications de rotules métalliques dans lesquelles la bague intérieure doit être réalisée en un matériau plus mou que celui constituant la bague extérieure, notamment pour améliorer le coefficient de frottement entre ces deux bagues.

Un autre procédé de réalisation de rotule métallique consiste à exécuter séparément les bagues intérieure et extérieure, et à ménager au niveau de la surface intérieure de cette dernière, des encoches définissant un logement cylindrique dont le rayon est voisin de celui de la surface extérieure de la bague intérieure. Cette dernière est alors insérée dans ce logement, puis pivotée d'un quart de tour. Cette solution induit toutefois des problèmes liés à une faiblesse mécanique au niveau des encoches, qui entraîne une diminution notable des capacités de charge de l'ensemble de la rotule.

Une autre solution consiste à réaliser la bague intérieure en deux éléments complémentaires. Ce procédé consiste à rectifier les faces en regard de deux barres métalliques, de manière à former deux plans de joint. Les deux barres ainsi rectifiées sont ensuite maintenues l'une contre l'autre au niveau des plans de joint, puis sont usinées ensemble jusqu'à présenter des profils correspondant à ceux de la bague intérieure définitive. Les deux éléments ainsi formés présentent, en section transversale, sensiblement une forme de C.

Leur montage dans la bague extérieure consiste tout d'abord à introduire le premier élément dans le volume intérieur de la bague extérieure, selon l'axe de cette dernière, puis à faire pivoter cet élément selon un quart de tour, de sorte que sa surface extérieure coopère avec la surface intérieure correspondante de la bague extérieure. Il s'agit ensuite d'introduire le second élément dans le volume intérieur de la bague extérieure selon une direction axiale, puis à faire pivoter ce second élément d'un quart de tour, de sorte que les plans de joint en regard de ces deux éléments puissent glisser l'un sur l'autre.

La bague intérieure bipartite ainsi formée présente toutefois un coût de fabrication extrêmement élevé. De plus, ses éléments constitutifs doivent être nécessairement appariés, car les plans de joint en regard des deux éléments doivent être parfaitement complémentaires afin de pouvoir glisser l'un sur l'autre lors du montage. Enfin, le montage de ces deux éléments à l'intérieur de la bague extérieure se révèle relativement délicat.

Enfin, US-A-3,107,954 décrit une bague intérieure constituée de deux éléments en forme de C. Ce document ne précise cependant pas le procédé de fabrication, permettant d'obtenir une telle bague intérieure.

L'invention se propose de pallier les inconvénients de l'art antérieur évoqués ci-dessus. A cet effet, elle a pour objet un procédé de fabrication d'une bague intérieure d'une rotule métallique, la bague intérieure possédant une surface extérieure sphérique tronquée adaptée pour coopérer avec la surface intérieure sphérique tronquée d'une bague extérieure et une surface intérieure adaptée pour coopérer avec un arbre, la bague intérieure étant constituée de deux éléments présentant, en coupe transversale, une forme de C, caractérisé en ce qu'il comprend les étapes suivantes :
- on réalise une ébauche d'un seul tenant qui possède des surfaces extérieure et intérieure sensiblement identiques aux surfaces définitives de la bague intérieure, et
- on effectue une découpe de cette ébauche de manière à réaliser les deux éléments en forme de C, constitutifs de la bague intérieure.

L'épaisseur de la découpe peut être comprise entre 1/10 mm et 5/10 mm et, de préférence, entre 2/10 mm et 4/10 mm. Le procédé conforme à l'invention peut être mis en oeuvre par l'intermédiaire de tout moyen approprié permettant la réalisation d'une découpe précise et d'épaisseur constante, comme notamment une scie-fil dont l'élément de découpe est réalisé par exemple en carbure de tungstène abrasif ou bien encore au moyen de laser ou d'eau sous pression.

Il existe, en service, entre les deux éléments constitutifs de la bague intérieure réalisée grâce au procédé de l'invention, un léger espace correspondant à l'épaisseur de la découpe. Il s'est avéré que, de manière inattendue, la présence de cet espace n'était nullement préjudiciable à la tenue mécanique de la bague intérieure ainsi réalisée, sur l'arbre sur lequel elle est placée.

De plus, la bague intérieure présente de nombreux avantages par rapport aux bagues intérieures obtenues conformément aux procédés de l'art antérieur décrits ci-dessus.

En effet, l'espace entre les surfaces en regard des deux éléments constitutifs de la bague intérieure permet de définir un volume au sein duquel peut être admis un fluide de graissage. Etant donné que ce volume de graissage s'étend depuis la surface intérieure jusqu'à la surface extérieure de la bague intérieure, le fluide ainsi admis peut assurer la lubrification de cette bague intérieure à la fois vis-à-vis de la bague extérieure et de l'arbre. L'existence de ce volume de graissage permet donc de s'affranchir de la réalisation d'encoches sur les surfaces de la bague intérieure, suivant la pratique connue.

Il s'est également révélé que le graissage ainsi permis est de meilleure qualité que celui assuré, par exemple, par l'intermédiaire d'encoches. En effet, étant donné qu'en service, les deux éléments constitutifs de la bague intérieure sont légèrement mis en mouvement, ceci a pour effet de diriger la graisse au niveau des surfaces à lubrifier.

De plus, il n'est pas nécessaire d'apparier les éléments constitutifs de la bague intérieure. En effet, ceux-ci présentent des dimensions réduites du fait de la découpe qui y a été effectuée, de sorte que, lors de leur montage dans la bague extérieure, leurs surfaces en regard ne sont pas destinées à glisser l'une sur l'autre. Une tolérance de fabrication substantielle peut donc être admise. En outre, les dimensions réduites de ces éléments constitutifs rendent leur montage dans le volume intérieur de la bague extérieure plus aisé et plus rapide que dans le cas de la bague intérieure bipartite connue de l'état de la technique.

Selon une caractéristique avantageuse de l'invention, la découpe est réalisée selon un plan sensiblement parallèle à un plan diamétral de l'ébauche et, en particulier, selon un plan diamétral de celle-ci. Ceci permet de faciliter le montage des deux éléments dans le volume intérieur de la bague extérieure. Il convient toutefois de noter que la découpe peut être effectuée avec un certain décalage par rapport à un tel plan. En effet, de légères erreurs peuvent être compensées du fait de l'espacement existant entre les deux éléments constitutifs de la bague intérieure. Ceci doit être comparé aux inconvénients de l'art antérieur, dans lequel les plans de joint des deux éléments en regard doivent être réalisés selon un plan strictement parallèle à un plan diamétral de la bague, pour permettre le montage.

Selon une caractéristique supplémentaire de l'invention, on fournit en outre des moyens amovibles de plaquage des éléments constitutifs de la bague intérieure contre la surface intérieure de la bague extérieure. Ceci permet d'éviter un déboîtement de ces éléments constitutifs, hors du volume intérieur de la bague extérieure, avant le montage de la rotule sur un arbre.

Selon une caractéristique supplémentaire de l'invention, les moyens de plaquage comprennent au moins un jonc engagé dans des gorges ménagées dans les surfaces en regard des éléments constitutifs de la bague intérieure. Après le montage de la bague intérieure sur l'arbre, ce jonc est retiré et les gorges qui en assuraient le logement constituent un volume supplémentaire de logement de graisse.

Selon une autre caractéristique de l'invention, les moyens de plaquage comprennent une douille destinée à être rapportée contre la périphérie intérieure des éléments constitutifs de la bague intérieure. Cette douille peut présenter des caractéristiques élastiques afin d'assurer un plaquage satisfaisant de la bague intérieure contre la bague extérieure. Elle est chassée de la surface intérieure de la bague intérieure contre laquelle elle est rapportée, lors du montage de cette bague intérieure sur l'arbre.

Selon une caractéristique avantageuse de l'invention, cette douille est pourvue d'ergots faisant saillie radialement à partir de sa périphérie extérieure, aptes à s'engager entre les surfaces en regard des éléments constitutifs de la bague intérieure.

En variante, les moyens de plaquage comprennent des lamelles élastiques engagées entre les surfaces en regard des éléments constitutifs de la bague intérieure.

L'invention va être décrite ci-dessous, en référence aux dessins annexés uniquement à titre d'exemples non limitatifs et dans lesquels :
- la figure 1 est une vue en coupe transversale d'une rotule conforme à l'invention, montée sur un arbre ;
- la figure 2 est une vue en coupe selon la ligne II-II à la figure 1 ;
- la figure 3 est une vue extérieure illustrant une ébauche à partir de laquelle est réalisée la rotule conforme à l'invention ;
- la figure 4 est une vue en coupe selon la ligne IV-IV à la figure 3 ;
- les figures 5 à 7 sont des vues analogues à la figure 3, illustrant différents modes de découpe de l'ébauche représentée à la figure 3 ;
- les figures 8 et 9 sont des vues en coupe, analogues à la figure 1, illustrant différents modes de réalisation de moyens de plaquage de la bague intérieure contre la bague extérieure, lorsque la rotule n'est pas montée sur un arbre.

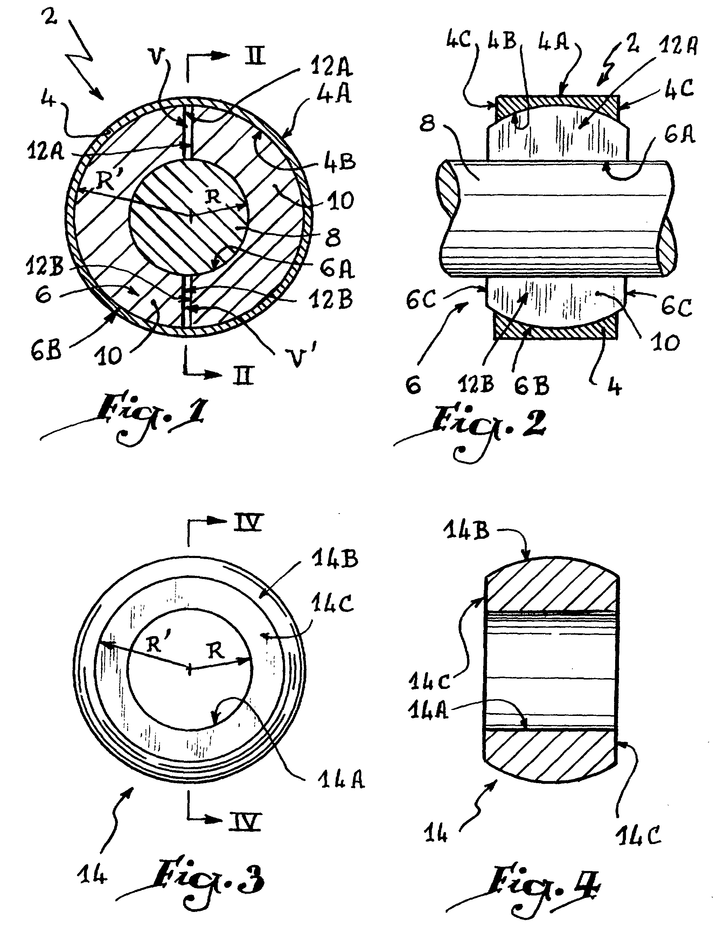

La rotule conforme à l'invention, représentée aux figures 1 et 2 et désignée dans son ensemble par la référence 2, se compose d'une bague extérieure 4 et d'une bague intérieure 6. La bague extérieure présente une surface extérieure 4A cylindrique, et une surface intérieure 4B sphérique tronquée se raccordant à la surface extérieure 4A par des parois latérales 4C.

La bague intérieure 6 présente une surface intérieure 6A sensiblement cylindrique de rayon R disposée contre la périphérie extérieure d'un arbre 8 cylindrique correspondant. La surface extérieure 6A de la bague intérieure 6 présente un profil sphérique de rayon R' correspondant à celui de la surface intérieure 4B de la bague extérieure 4, de sorte que la bague intérieure et la bague extérieure possèdent, l'une par rapport à l'autre, trois degrés de liberté en rotation. Des parois latérales 6C relient les surfaces intérieure 6A et extérieure 6B de la bague intérieure 6. Ces parois latérales 6C font saillie, en coupe axiale, de part et d'autre des parois latérales 4C de la bague extérieure 4 dans la position de la figure 2, dans laquelle la surface cylindrique 4A est coaxiale à l'arbre 8.

Conformément à l'invention, la bague intérieure 6 est réalisée en deux éléments 10 à peu près complémentaires présentant, en coupe transversale, sensiblement une forme de C. Ces éléments 10 sont, dans l'exemple représenté à la figure 1, symétriques l'un de l'autre par rapport à un plan diamétral de la bague intérieure, qui est le plan de coupe de la figure 2.

Les faces en regard 12A, 12B des éléments 10 sont planes et séparées mutuellement par un espace de manière à définir deux volumes libres V et V' de part et d'autre de l'arbre 8. Il est à noter que, dans l'ensemble des figures, la dimension transversale de ces volumes a été représentée à une plus grande échelle qu'elle ne l'est en réalité, dans un souci de clarté.

En service, l'arbre 8 plaque la bague intérieure 6 contre la bague extérieure 4, de sorte que la présence des volumes libres V et V' n'est nullement préjudiciable à la bonne tenue mécanique de la rotule.

En outre, ces volumes libres V et V' permettent le logement de graisse assurant, en service, la lubrification des surfaces en contact de la bague intérieure et de l'arbre d'une part, ainsi que de la bague intérieure et de la bague extérieure d'autre part. Il n'est donc pas nécessaire de prévoir des encoches de graissage qui, dans l'état de la technique, sont réalisées sur la surface extérieure 6B de la bague intérieure 6.

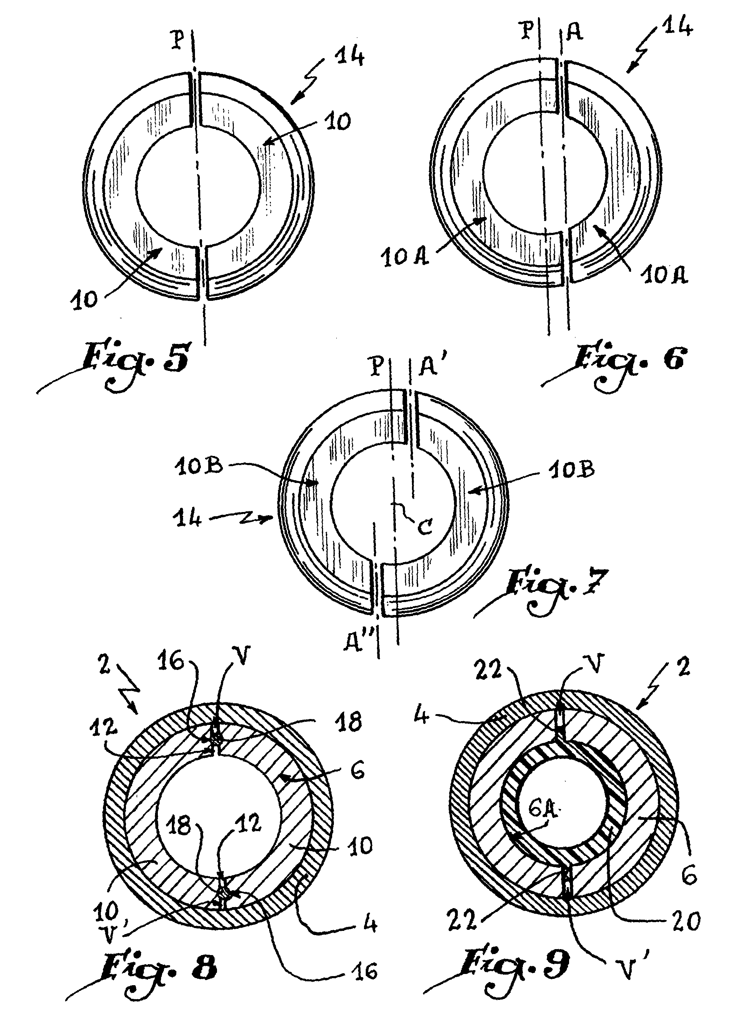

On va maintenant décrire le procédé de fabrication de la bague intérieure 6, en faisant référence aux figures 3 à 7.

Il s'agit tout d'abord d'exécuter une ébauche 14 annulaire, réalisée d'un seul tenant. Cette ébauche 14 présente des dimensions identiques à celle de la bague intérieure 6 telle que montée dans le volume intérieur de la bague extérieure 4. Elle possède ainsi une surface intérieure 14A cylindrique de rayon R correspondant à celui de la surface intérieure 6A de la bague intérieure 6. Cette ébauche comporte également une surface extérieure 14B sphérique tronquée, de rayon R' analogue à celui de la surface extérieure 6B de la bague intérieure 6. Elle comprend enfin des parois latérales 14C reliant sa surface intérieure 14A à sa surface extérieure 14B, et dont les dimensions sont identiques à celles des parois latérales 6C de la bague intérieure 6.

Il s'agit ensuite d'exécuter une découpe de cette ébauche 14 de manière à réaliser les deux éléments 10 constitutifs de la bague intérieure 6. Cette découpe peut être réalisée selon un plan diamétral P de l'ébauche, comme le montre la figure 5, de manière à former les deux éléments 10 complémentaires représentés en figure 1 et 2.

Comme le montre la figure 6, on peut également effectuer la découpe de l'ébauche selon un plan A parallèle à un plan diamétral P de l'ébauche, mais distinct de celui-ci. On obtient alors deux éléments 10A dont les dimensions sont différentes.

Comme le montre la figure 7, on peut également réaliser une première découpe selon un premier plan A' parallèle à un plan diamétral P de l'ébauche 14, et réaliser une seconde découpe, dans une zone opposée par rapport au centre C de l'ébauche 14, selon un autre plan A" parallèle au plan P. On forme alors deux éléments 10B identiques.

L'insertion des deux éléments à peu près complémentaires, respectivement 10, 10A et 10B, s'effectue de manière connue. A cet effet, on rentre tout d'abord un premier élément dans le volume intérieur de la bague extérieure 4, selon l'axe de cette dernière. Puis on fait pivoter d'un quart de tour le premier élément inséré, de sorte que ses parois latérales soient parallèles à celles de la bague extérieure. Puis, on introduit de manière analogue le second élément dans le volume intérieur de la bague extérieure 4. Tout en maintenant le premier élément, on fait pivoter le second élément de manière à les aligner au sein du volume intérieur de la bague exérieure 4.

On conçoit aisément que le procédé conforme à l'invention permet une fabrication moins contraignante, ainsi qu'un montage plus aisé, que le procédé de l'art antérieur. En effet, étant donné que les deux éléments ne s'étendent pas sur un secteur angulaire de 360°, du fait de l'épaisseur de la découpe, leurs faces en regard peuvent ne pas être rigoureusement parallèles l'une à l'autre. Il n'est donc pas nécessaire d'apparier deux éléments rigoureusement complémentaires. De plus, le montage de ces éléments est relativement aisé puisqu'il n'est pas nécessaire de faire coïncider strictement les faces en regard des deux éléments.

La figure 8 représente la rotule 2 non montée sur l'arbre 8. Des gorges rectilignes 16, par exemple à section circulaire, sont ménagées sur les faces 12 en regard de chaque élément complémentaire 10. Deux joncs 18 sont engagés dans les volumes libres V et V' définis entre ces faces en regard 12, et coopèrent avec les gorges 16. La dimension transversale de ces joncs 18 est telle que ces derniers assurent le plaquage de la bague intérieure 6 contre la bague extérieure 4. Ceci permet d'éviter que les deux éléments constitutifs de cette bague intérieure 6 ne se déboîtent hors du volume intérieur de la bague extérieure 4, par exemple durant le transport des rotules.

La figure 9 montre une variante de réalisation de ces moyens de plaquage de la bague intérieure contre la bague extérieure. Ces derniers consistent en une douille 20 rapportée contre la surface intérieure 6A la bague intérieure 6. Cette douille 20 est pourvue d'ergots 22 faisant saillie radialement à partir de sa périphérie extérieure, et s'engageant partiellement dans les volumes libres V et V' définis entre les faces en regard 12 des deux éléments 10. Elle peut être aisément retirée du volume intérieur de la bague intérieure 6 puisqu'elle s'en trouve chassée lors du montage de la rotule 2 sur l'arbre 8.

L'invention n'est pas limitée aux exemples décrits et représentés. Ainsi, la douille 20 peut ne pas être munie d'ergots 22. En outre, on peut prévoir, à la place des joncs 18 coopérant avec les gorges 16, des lamelles élastiques engagées dans les volumes libres V et V', qui assurent une fonction de calage mutuel des deux éléments 10.

On peut également prévoir de munir la rotule d'un jonc, notamment métallique, permettant de maintenir l'assemblage de la rotule, lors de son installation ou au cours d'une opération d'entretien. Ce jonc est notamment logé dans des rainures, par exemple de graissage, ménagées à la périphérie intérieure des deux éléments constitutifs de la bague intérieure.

## Revendications

1. Procédé de fabrication d'une bague intérieure d'une rotule métallique (2), ladite bague intérieure (6) possédant une surface extérieure (6B) sphérique tronquée, adaptée pour coopérer avec la surface intérieure sphérique tronquée (4B) d'une bague extérieure (4), et une surface intérieure (6A) adaptée pour coopérer avec un arbre (8), ladite bague intérieure (6) étant constituée de deux éléments (10) présentant, en coupe transversale, une forme de C, **caractérisé en ce qu'**il comprend les étapes suivantes :
- on réalise une ébauche (14) d'un seul tenant qui possède des surfaces extérieure (14B) et intérieure (14A) sensiblement identiques aux surfaces définitives (6A, 6B) de ladite bague intérieure (6), et
- on effectue une découpe de cette ébauche (14) de manière à réaliser les deux éléments (10) en forme de C, constitutifs de la bague intérieure (6).

2. Procédé selon la revendication 1, **caractérisé en ce que** l'épaisseur de la découpe est comprise entre 1/10 mm et 5/10 mm et, de préférence, entre 2/10 mm et 4/10 mm.

3. Procédé selon la revendication 1 ou 2, **caractérisé en ce que** la découpe est réalisée selon au moins un plan (P ; A ; A', A") sensiblement parallèle à un plan diamétral (P) de l'ébauche (14) ou situé dans un tel plan.

4. Procédé selon l'une des revendications précédentes, **caractérisé en ce qu'**on fournit en outre des moyens (18 ; 20) amovibles de plaquage des éléments (10) constitutifs de la bague intérieure (6) contre la surface intérieure (4B) de la bague extérieure (4).

5. Procédé selon la revendication 4, **caractérisé en ce que** les moyens de plaquage comprennent au moins un jonc (18) engagé dans des gorges (16) ménagées dans les surfaces en regard (12) des éléments (10) constitutifs de la bague intérieure (6).

6. Procédé selon la revendication 4, **caractérisé en ce que** les moyens de plaquage comprennent une douille (20) destinée à être rapportée contre la périphérie intérieure (6A) des éléments (10) constitutifs de la bague intérieure (6).

7. Procédé selon la revendication 6, **caractérisé en ce que** la douille (20) est pourvue d'ergots (22) faisant saillie radialement à partir de sa périphérie extérieure, aptes à s'engager entre les surfaces en regard (12) des éléments constitutifs (10) de la bague intérieure (6).

8. Procédé selon la revendication 4, **caractérisé en ce que** les moyens de plaquage comprennent des lamelles élastiques engagées entre les surfaces en regard (12) des éléments constitutifs (10) de la bague intérieure (6).

## Claims

1. A method of manufacturing an inner ring of a metal ball joint (2), said inner ring (6) having a truncated spherical external surface (6B) suitable for cooperating with the truncated spherical internal surface (4B) of an outer ring (4), and an internal surface (6A) suitable for cooperating with a shaft (8), said inner ring (6) being formed from two elements (10) which are C-shaped in cross-section, **characterised in that** it comprises the following stages:
- a one-piece blank (14) is produced which has external (14B) and internal (14A) surfaces which are substantially identical to the final surfaces (6A, 6B) of said inner ring (6), and
- a cut is made in said blank (14) so as to produce the two C-shaped elements (10) forming the inner ring (6).

2. A method according to claim 1, **characterised in that** the thickness of the cut ranges between 1/10 mm and 5/10 mm, preferably between 2/10 mm and 4/10 mm.

3. A method according to claim 1 or 2, **characterised in that** the cut is made in at least one plane (P; A; A'; A") which is substantially parallel to a diametric plane (P) of the blank, (14) or is situated in such a plane.

4. A method according to any one of the preceding claims, **characterised in that** removable means (18; 20) are additionally provided for placing the constituent elements (10) of the inner ring (6) against the internal surface (4B) of the outer ring (4).

5. A method according to claim 4, **characterised in that** the means of placement comprise at least one rod (18) which is fitted in grooves (16) disposed in the opposing surfaces (12) of the constituent elements (10) of the inner ring (6).

6. A method according to claim 4, **characterised in that** the means of placement comprise a sleeve (20) which is intended to be brought against the internal periphery (6A) of the constituent elements (10) of the inner ring (6).

7. A method according to claim 6, **characterised in that** the sleeve (20) is provided with lugs (22) which protrude radially from its external periphery and which are suitable for fitting between the opposing surfaces (12) of the constituent elements (10) of the inner ring (6).

8. A method according to claim 4, **characterised in that** the means of placement comprise elastic strips which are fitted between the opposing surfaces (12) of the constituent elements (10) of the inner ring (6).

## Patentansprüche

1. Verfahren zur Herstellung eines Innenringes eines metallischen Kugelgelenks (2), wobei der Innenring (6) eine sphärische abgeflachte Außenfläche (6B), die ausgebildet ist, um mit einer abgeflachten sphärischen Innenfläche (4B) eines Außenringes (4) zusammenzuarbeiten, und eine Innenfläche (6A) besitzt, die ausgebildet ist, um mit einer Achse (8) zusammenzuarbeiten, wobei der Innenring (6) aus zwei Bestandteilen (10) gebildet ist, die im Querschnitt eine C-Form aufweisen, **dadurch gekennzeichnet, dass** es die folgenden Schnitte umfasst:
- man stellt einen Rohling (14) aus einem Stück her, der Außen- (14B) und Innenflächen (14A) besitzt, die im Wesentlichen identisch zu den endgültigen Flächen (6A, 6B) des Innenrings (6) sind, und
- man führt einen Schnittvorgang an diesem Rohling (14) derart durch, dass die zwei Bestandteile (10) in C-Form des Innenrings (6) hergestellt werden.

2. Verfahren nach Anspruch 1, **dadurch gekennzeichnet, dass** die Dicke des Schnitts zwischen 1/10 mm und 5/10 mm und 4/10 mm liegt.

3. Verfahren nach Anspruch 1 oder Anspruch 2, **dadurch gekennzeichnet, dass** der Schnittvorgang entsprechend mindestens einer Ebene (P, A; A', A") durchgeführt wird, die im Wesentlichen parallel zu einer Durchmesserebene (P) des Rohlings (14) ist oder in einer solchen Ebene liegt.

4. Verfahren nach einem der vorhergehenden Ansprüche, **dadurch gekennzeichnet, dass** man darüber hinaus lösbare Mittel (18; 20) zum Andrücken der Bestandteile (10) des Innenrings (6) gegen die Innenfläche (4B) des Außenrings (4) liefert.

5. Verfahren nach Anspruch 4, **dadurch gekennzeichnet, dass** die Mittel zum Andrücken mindestens einen Stab (18) umfassen, der in Nuten (16) eingreift, die in die einander gegenüberliegenden Flächen (12) der Bestandteile (10) des Innenrings (6) eingearbeitet sind.

6. Verfahren nach Anspruch 4, **dadurch gekennzeichnet, dass** die Mittel zum Andrücken eine Hülse (20) umfassen, die dazu vorgesehen ist, gegen den Innenumfang (6A) der Bestandteile (10) des Innenrings (6) eingesetzt zu werden.

7. Verfahren nach Anspruch 6, **dadurch gekennzeichnet, dass** die Hülse (20) mit radial von ihrem Außenumfang hervorspringenden Ansätzen (22) versehen ist, die geeignet sind, zwischen die sich einander gegenüberstehenden Flächen (12) der Bestandteile (10) des Innenrings (6) einzugreifen.

8. Verfahren nach Anspruch 4, **dadurch gekennzeichnet, dass** die Mittel zum Andrücken elastische Lamellen umfassen, die zwischen die sich einander gegenüberstehenden Flächen (12) der Bestandteile (10) des Innenrings (6) eingreifen.
